**Europäisches Patentamt**

(19) **European Patent Office**

**Office européen des brevets**

(11) Veröffentlichungsnummer: **0 051 771**
**B1**

(12) ## EUROPÄISCHE PATENTSCHRIFT

(45) Veröffentlichungstag der Patentschrift:
**03.10.84**

(21) Anmeldenummer: **81108685.9**

(22) Anmeldetag: **22.10.81**

(51) Int. Cl.³: **B 23 Q 11/00,** B 23 B 25/06

(54) **Verfahren und Vorrichtung zur Überwachung der Schneidplatten in Werkzeugmaschinen.**

(30) Priorität: **08.11.80 DE 3042211**

(43) Veröffentlichungstag der Anmeldung:
**19.05.82 Patentblatt 82/20**

(45) Bekanntmachung des Hinweises auf die Patenterteilung:
**03.10.84 Patentblatt 84/40**

(84) Benannte Vertragsstaaten:
**AT BE CH FR GB IT LI LU NL SE**

(56) Entgegenhaltungen:
**GB - A - 2 058 614**
**US - A - 3 579 775**
**US - A - 3 912 925**

**The Engineer's Digest, Band 17, 1956, Heft 1 P.N.**
**Malakhov: "Automatic Control of Cutting Speed by the**
**Temperature of the Cutting-Tool Edge" Seiten 13, 14**
**Messen und Prüfen/Automatik, Dezember 1978, Heft 12**
**A.J. INTRIERI: "Strahlungsthermometer mit**
**Glasfaserbündel erschliesst neue**
**Anwendungsbereiche" Seiten 849, 850, 859**

(73) Patentinhaber: **Feldmühle Aktiengesellschaft,**
**Fritz-Vomfelde-Platz 4, D-4000 Düsseldorf 11 (DE)**

(72) Erfinder: **Gomoll, Volker, Dr, Dipl.-Ing.,**
**Max-Eyth-Strasse 54, D-7314 Wernau (DE)**

(74) Vertreter: **Uhlmann, Hans, Dr. rer.nat., Dipl.-Chem.,**
**Gladbacher Strasse 189, D-4060 Viersen 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft entsprechend dem Oberbegriff von Anspruch 1 ein Verfahren zur Überwachung der Schneidplatten in Werkzeugmaschinen gemäss der US-A 3 579 775 während der Bearbeitung von Werkstücken, wobei die auftretende Temperatur erfasst und einer Auswerteeinrichtung zugeführt wird.

Unter Werkzeugmaschinen im Sinne der vorliegenden Anmeldung sind vor allen Dingen Drehmaschinen, aber auch ebenso Fräsmaschinen, Bohrwerke und in gewissem Rahmen Hobelmaschinen zu verstehen, soweit diese Aggregate mit Schneidplatten, insbesondere auswechselbaren Schneidplatten, arbeiten. Auswechselbare Schneidplatten werden meist in Form von sogenannten Wendeschneidplatten eingesetzt und bestehen aus einer Vielzahl von Materialien, insbesondere aus Hartmetall oder Oxidkeramik. Diese relativ preiswerten Schneidplatten gestatten hohe Bearbeitungsgeschwindigkeiten, damit also ein sehr wirtschaftliches Arbeiten. Selbstverständlich verschleissen solche Platten auch und müssen dann ersetzt werden. Gefährlicher ist jedoch nicht der normale Verschleiss, sondern eine Überlastung der Schneidplatte, die beim Hartmetall zu einer plastischen Deformation, bei der Keramik zu einem Riss in der Schneidplatte oder zum Ausbrechen der Schneidecken, bzw. Schneidkanten führen kann.

Aufgrund der hohen Schnittgeschwindigkeiten führt eine solche Schneidplattenbeschädigung zur Beschädigung des Werkstückes, das in den meisten Fällen nicht weiterverwendet werden kann, ebenfalls zur Beschädigung des Schneidwerkzeuges, also beispielsweise des Klemmhalters, Dejustieren der Maschineneinstellung usw. Die Instandsetzung der Maschine bedingt erhebliche Maschinenstillstandszeiten, wodurch die produzierten Stückzahlen sich reduzieren, die Kosten pro produzierter Einheit damit steigen.

Aufgabe der vorliegenden Erfindung ist daher, die Rissbildung an der keramischen Schneidplatte so frühzeitig zu erkennen, dass Beschädigungen von Werkstück oder Maschine, sowie die Dejustierung und Beschädigung eines Klemmhalters vermieden werden.

Diese Aufgabe wird durch die Kombination der Merkmale des kennzeichnenden Teiles von Anspruch 1 gelöst.

Bei jeder Zerspanung tritt eine Temperatur auf, die sowohl die Schneidplatte auf einen bestimmten Wert erwärmt als auch das bearbeitete Werkstück, hier insbesondere die gerade geschnittene Fläche. Gleichzeitig tritt eine höhere Erwärmung des abgetrennten Spanes auf.

Die erreichte Temperatur ist zwar abhängig von den Schneidbedingungen, bleibt aber während des Bearbeitungsvorganges praktisch konstant, wenn nicht unvorhergesehene Einflüsse auftauchen. Kommt es infolge Überlastung zu einer Rissbildung in der Schneidplatte, so erhöht sich schlagartig die Temperatur. Damit kann der Temperaturanstieg als Auslösegrösse für die Gefahr des Auftretens eines Schneidplattenbruches und damit die Gefahr der Beschädigung von Werkstück und Maschine dienen.

Die Temperatur wird dabei durch einen Thermosensor erfasst, der mit einer Auswerteeinrichtung verbunden ist, die bei einer plötzlichen Temperaturerhöhung sofort einen Impuls auslöst, wodurch Stoppvorgänge gesteuert werden können.

Gemäss einer bevorzugten Ausgestaltung der Erfindung setzt der auf plötzliche Temperatur beruhende Impuls sofort den Vorschub der Werkzeugmaschine still.

Wie bereits ausgeführt, beruht die plötzliche Temperaturerhöhung vermutlich auf dem Beginn der Rissbildung in der Schneidplatte. Die Stillsetzung des Vorschubs führt dazu, dass die Schneidplattenbelastung sofort gestoppt wird, so dass der gefürchtete Bruch der Schneidplatte nicht eintreten kann. Mit der Verhinderung des Schneidplattenbruches wird zugleich das Dejustieren des Stahlhalters vermieden, auch kann dann keine Beschädigung des Stahlhalters mehr erfolgen. Die Bearbeitung des Werkstückes ist unterbrochen, so dass auch das Werkstück nicht beschädigt werden kann.

Eine weitere vorteilhafte Ausgestaltung der Erfindung sieht vor, dass durch den Impuls, der die Werkzeugmaschine stillsetzt, eine Verriegelung erfolgt, die die Bearbeitung eines neues Werkstückes erst dann gestattet, wenn vom Bedienungsmann die Sperre gelöst wurde.

Neben der Möglichkeit der wirtschaftlicheren Ausnutzung einer Schneidplatte spielt auch die psychologische Belastung des Bedienenden der Werkzeugmaschine erhebliche Beachtung. Durch die Gewissheit, dass sein Aggregat, d.h. sowohl das Werkstück als auch das Werkzeug nicht zerstört werden, wenn die bisher üblichen unvorhersehbaren Härteunterschiede auftreten, ist er viel eher gewillt, die volle Leistung der Maschine auszunutzen und damit eine grössere wirtschaftliche Produktion zu erzielen als vor dem, wo ihm die Angst vor der Produktion von Ausschuss, Stillstandszeiten und Werkzeug- bzw. Maschinenbeschädigungen davon abhielten.

Eine zweckmässige Ausgestaltung der Erfindung sieht vor, dass die Stillsetzung der Werkzeugmaschine durch optische und/oder akustische Mittel angezeigt wird. Durch diese Anzeige werden lange Stillstandzeiten vermieden, weil der Bedienende sofort auf den Stillstand der Maschine bzw. des Vorschubs aufmerksam gemacht wird.

Die Temperaturerfassung am sich sehr schnellbewegenden Span bereitet Schwierigkeiten, weil sich die Spanform nicht immer 100%ig vorhersagen lässt. Deshalb wird der Messfleck des optischen Elementes auf die unmittelbar vorher von der Schneide bearbeitete Fläche des Werkstückes gerichtet. Unter Messfleck ist dabei die Fläche zu verstehen, die durch das optische Element erfasst wird, oder anders ausgedrückt, der Fleck, der, ausgestrahlt durch eine Lichtquelle, von diesem optischen Element auf das Werkstück geworfen wird. Im allgemeinen genügt es, wenn dieser Messfleck eine Ausdehnung von unter 50 mm² besitzt, weil auch dann, wenn nur ein Bruchteil dieser Fläche auf die soeben bearbeitete Schnittfläche des Werkstückes fällt, noch ein eindeutiges Signal zu ermitteln ist. Der Messfleck sollte jedoch nicht unnötig klein gewählt werden. Die un-

3　　　　　0 051 771　　　　　4

tere Grenze dürfte dabei zweckmässig bei 1 mm² liegen, weil dadurch eine sehr hohe Justiergenauigkeit für den Messfleck, der stets in unmittelbarer Schneidennähe liegen sollte, erforderlich ist.

Bei den hohen Schnittgeschwindigkeiten, die beim Arbeiten insbesondere mit oxidkeramischen Wendeschneidplatten gewählt werden können, ist es so beispielsweise beim Drehen möglich, den Messfleck auf jeden beliebigen Bereich der bearbeiteten Kreisfläche zu richten. Zweckmässig ist jedoch der Messfleck auf einen Bereich gerichtet, der nicht weiter als 30 bis 60 Grad vom Angriff der Schneide an das Werkstück entfernt ist, vorzugsweise liegt er unter 30 Grad Entfernung von der Schneide, weil dadurch sichergestellt ist, dass die Messung nicht durch fliegende Späne — die eine höhere Temperatur aufweisen — beeinträchtigt wird.

Die Erfindung wird nachstehend anhand der Zeichnungen beschrieben.

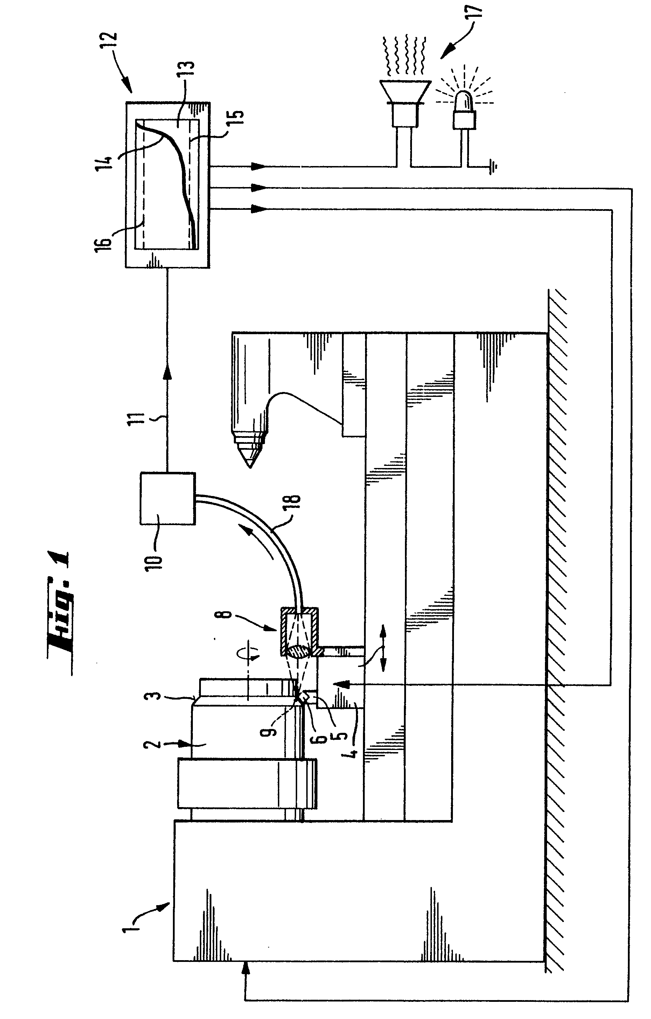

Fig. 1 zeigt die Prinzipskizze einer Drehmaschine mit einem Standzeitsensor,

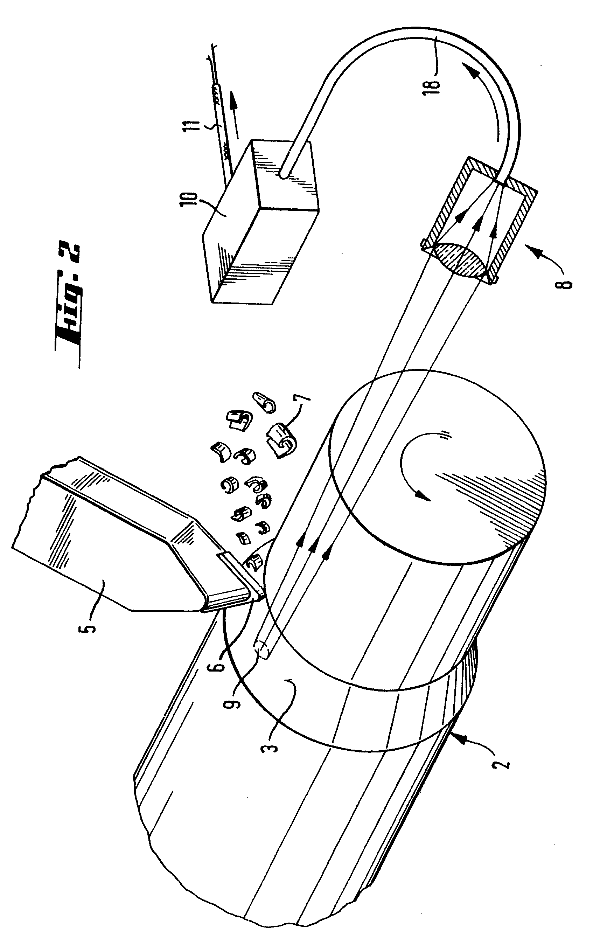

Fig. 2 einen Teilausschnitt daraus.

In die Drehmaschine 1 ist das Werkstück 2 eingespannt, das einen Absatz 3 aufweist, der durch den Drehvorgang soeben erzeugt wurde. Der Support 4 trägt den Drehstahl 5, auf dem in einer Aussparung die Wendeschneidplatte 6 befestigt ist. Das Werkstück 2 dreht sich entgegen dem Uhrzeigersinn, die Wendeschneidplatte 6 zerspant das Werkstück 2, so dass die Späne 7 in Form von Spanlocken abgeschleudert werden. Ein optisches Element 8 in Form einer Sammellinse wird durch die Bewegung des Drehstahles 5 so gesteuert, dass sein Messfleck 9 auf dem gerade bearbeiteten Absatz 3 des Werkstückes 2 liegt. Das optische Element 8 ist über Lichtleiter 18 mit der Messzelle 10 verbunden, die Temperaturen über 50°C erfasst. Die Messzelle 10 ist über Leitungen mit der Auswerteeinrichtung 12 verbunden. Die Auswerteeinrichtung 12 weist einen Schreiber 13 auf, der den Verlauf der Temperaturkurve 14 sichtbar macht. Auf dem Schreiber ist der Mittelwert 15 der Temperaturkurve 14 ebenso wie der Maximalwert 16 angegeben. Der Stopp wird ausgelöst, sobald in der Auswerteeinrichtung 12 eine starke Veränderung der Steigung der Temperaturkurve 14 ermittelt wird. Das heisst, bei einem schlagartigen Ansteigen der Temperatur. Bei Stillsetzung der Drehmaschine 1 nach Beendigung des laufenden Bearbeitungsvorganges wird die optische und/oder akustische Alarmanlage 17 ausgelöst, um den Bedienungsmann aufmerksam zu machen.

## Patentansprüche

1. Verfahren zur Überwachung der Schneidplatten in Werkzeugmaschinen während der Bearbeitung von Werkstücken, wobei die auftretende Temperatur mittels eines einem Thermosensor vorgeschalteten optischen Elementes erfasst und einer Auswerteeinrichtung zugeführt wird, gekennzeichnet durch die Kombination folgender Merkmale: die Temperatur wird an der unmittelbar vorher von der Schneide bearbeiteten Fläche des Werkstückes gemessen und
der durch den Thermosensor ermittelte Temperaturwert wird einer Vergleichsstation zugeführt, die bei plötzlicher Temperaturerhöhung einen Impuls auslöst.

2. Verfahren nach Anspruch 1, dadurch gekennzeichnet, dass der auf plötzlicher Temperaturerhöhung beruhende Impuls sofort den Vorschub der Werkzeugmaschine stillsetzt.

3. Verfahren nach einem der Ansprüche 1 oder 2, dadurch gekennzeichnet, dass durch den Impuls eine Verriegelung erfolgt.

4. Verfahren nach einem der Ansprüche 1 bis 3, dadurch gekennzeichnet, dass die Stillsetzung der Werkzeugmaschine durch optische und/oder akustische Mittel angezeigt wird.

## Claims

1. Process for monitoring the cutting plates in machine tools during the machining of workpieces, the temperature that occurs being detected by means of an optical element connected upstream of a thermosensor and being supplied to an evaluating device, characterised by the combination of the following features:
the temperature is measured at the surface of the workpiece that has been machined by the cutter directly beforehand, and
the temperature value detected by the thermosensor is supplied to a comparison station which triggers a pulse in the case of a sudden increase in temperature.

2. Process according to claim 1, characterised in that the pulse that is derived from the sudden increase in temperature immediately stops the advance of the machine tool.

3. Process according to claim 1 or 2, characterised in that the locking is effected as a result of the pulse.

4. Process according to any one of claims 1 to 3, characterised in that the stopping of the machine tool is indicated by optical and/or acoustic means.

## Revendications

1. Procédé pour surveiller des plaquettes de coupe dans des machine-outils, au cours de l'usinage de pièces, dans lequel la température produite est captée au moyen d'un thermocapteur précédé d'un élément optique et envoyée à un dispositif d'interprétation, caractérisé par la combinaison des caractéristiques suivantes:
la température est mesurée à la surface de la pièce que le tranchant vient tout juste d'usiner, et
la valeur de température déterminée par le thermocapteur est envoyée à un poste de comparaison qui, en cas d'accroissement subit de la température, déclenche une impulsion.

2. Procédé selon la revendication 1, caractérisé par le fait que l'impulsion due à un accroissement subit de la température provoque immédiatement l'arrêt de l'avance de la machine-outil.

3. Procédé selon la revendication 1 ou 2, caractérisé par le fait que l'impulsion provoque un verrouillage.

4. Procédé selon l'une quelconque des revendications 1 à 3, caractérisé par le fait que l'arrêt de la machine-outil est signalé par des moyens optiques et/ou acoustiques.

**Fig. 1**

0 051 771

_Fig: 2_

0 051 771